## Europäisches Patentamt

## European Patent Office

## Office européen des brevets

(19)

(11) Veröffentlichungsnummer: **0 005 531**
**B1**

(12) ## EUROPÄISCHE PATENTSCHRIFT

(45) Veröffentlichungstag der Patentschrift:
**14.03.84**

(51) Int. Cl.³: **F 16 C 33/20**, C 08 J 5/16

(21) Anmeldenummer: **79101470.7**

(22) Anmeldetag: **14.05.79**

(54) **Kunststoff-Kunststoff-Gleitpaarungen in tribologischen Systemen.**

(30) Priorität: **19.05.78 AT 3664/78**
**14.03.79 AT 1930/79**

(43) Veröffentlichungstag der Anmeldung:
**28.11.79 Patentblatt 79/24**

(45) Bekanntmachung des Hinweises auf die Patenterteilung:
**14.03.84 Patentblatt 84/11**

(84) Benannte Vertragsstaaten:
**BE CH DE FR GB IT LU NL SE**

(56) Entgegenhaltungen:
**DD - A - 122 576**
**DE - A - 2 251 637**
**DE - B - 25 271**
**GB - A - 982 347**
**GB - A - 1 475 295**
**US - A - 3 502 380**

**VDI-RICHTLINIEN 2541 "Gleitlager aus
Thermoplastischen Kunststoffen", Oktober 1975, Beuth
Verlag, Berlin und Köln**
**TECHNISCHE RUNDSCHAU, Band 63, April 1971, Bern
"Gleitlager aus Azetalhomopolymer", Seiten 29 bis 37**
**KUNSTSTOFFE, Band 62, 1972, Heft 1, München G.
ERHARD et al. "Gleitelemente aus thermoplastischen
Kunststoffen" Seiten 2 bis 9**

(73) Patentinhaber: **Heinz Faigle KG, Landstrasse 31,
A-6971 Hard (AT)**

(72) Erfinder: **Faigle, Heinz, Am Kohlplatz 8, A-6971 Hard (AT)**

(74) Vertreter: **Hefel, Herbert, Dipl.-Ing., Egelseestrasse 65a,
A-6800 Feldkirch-Tosters (AT)**

(56) Entgegenhaltungen: (Fortsetzung)
**KUNSTSTOFFE, Band 62, 1972, Heft 4, München G.
ERHARD et al. "Gleitelemente aus thermoplastischen
Kunststoffen" Seiten 232 bis 234**
**SCHMIERTECHNIK u. TRIBOLOGIE, Band 24, 2/1977,
Düsseldorf F. DÜRR "Die Schmierung bei Kunststoffen
in der Feinwerktechnik" Seiten 31 bis 36**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Kunststoff-Kunststoff-Gleitpaarungen in tribologischen Systemen

Der Erfindungsgegenstand ist ein tribologisches System aus Kunststoff/Kunststoff-Paarungen, bestehend aus zwei Hauptgleitpartnern und einem Hilfsgleitpartner, insbesonders Gleitlager, in dem die Kunststoffe — ggfs. unterstützt durch Schmierstoffe — in Gleitreibung zueinander Relativbewegungen ausführen, wobei wenigstens einer der Hauptgleitpartner und/oder ein Hilfsgleitpartner ein polares, cyclische Gruppierungen enthaltendes Polymer ist, in dem die cyclische Gruppierung zumindest auf einer Seite direkt an Stickstoff, Phosphor, Sauerstoff und/oder Schwefel gebunden ist oder in dem die Ringe solche Atome enthalten, aus der Gruppe

a) einbindig aromatische Polymere
b) aromatische Polyheterocyclen (Halb-Leiterpolymere)
c) einbindige Polyheterocyclen
d) aromatische Leiterpolymere
e) Cypolymerisate hergestellt aus den Polymeren a) bis d) zugrundeliegenden Monomeren untereinander oder mit anderen Monomeren
f) Gemische der Polymeren a) bis d) untereinander oder mit anderen Polymeren

wobei entweder beide Hauptgleitpartner polar sind und unterschiedliche cyclische Gruppierungen und/ oder unterschiedliche Atome oder Gruppen gebunden an die cyclische Gruppierung enthalten, und der Hilfsgleitpartner ein unpolares Polymer ist oder daß beide Hauptgleitpartner aus unpolaren Polymeren bestehen und der Hilfsgleitpartner aus einem polaren, cyclische Gruppierungen enthaltenden Polymeren a) bis f) besteht. (Zur Bezeichnung der erfindungsgemäß verwendeten Kettenpolymere wurde der Einteilung und Terminologie von »E. Behr: Hochtemperaturbeständige Kunststoffe; Carl Hanser Verlag München, 1969« gefolgt.)

Seit dem Beginn der Verwendung von Kunststoffen in tribologischen Systemen (z. B. Gleitlagern oder Zahnradpaarungen) wurde primär an eine Paarung des Kunststoff-Elements gegenüber einem metallischen Maschinenelement gedacht. Über die dabei auftretenden Reibungs- und Verschleißprobleme, sowie sich ausbildenden Oberflächenstrukturen besteht reichhaltige Literatur. Ferner wurde auch vorgeschlagen, in die Kunststoffe oder an deren Oberflächen Trockenschmierstoffe einzubauen, beispielsweise PE, PTFE oder $MoS_2$.

Erst relativ spät und bisher in noch recht bescheidenem Umfang sind Paarungen von Kunststoffen gegen Kunststoffe in tribologischen Systemen bekannt geworden. So nennt beispielsweise die VDI Richtlinie 2541 die Paarungen, PA/POM, PA/HDPE, PETP/POM, PBTP/PA (Erläuterung der Abkürzungen siehe Seiten . . ./. . .), wobei einzelne dieser Kunststoffe auch in Füllung mit Glasfasern, Glaskugeln, Graphit oder PE aufgezählt sind. In der gleichen Richtlinie wird auch angegeben, daß Kunststoff/Kunststoff-Paarungen gegenüber Kunststoff/Metall-Paarungen zu einer niedrigeren und gleichbleibenden Gleitreibungszahl tendieren.

Bei der Untersuchung von Kunststoff/Metall-Paarungen wurde gefunden, daß im allgemeinen solche Polymere, die in ihren Molekülen cyclische Gruppen tragen oder vollcyclisch sind, besonders dann ausgesprochen schlechte Gleit- und Verschleißeigenschaften aufweisen, wenn an deren cyclischen Gruppen Sauerstoff oder Schwefel gekoppelt ist. So sind beispielsweise Polyphenylenoxyd und Polyphenylensulfid keine guten Gleitpartner gegen Stahl. Dies überrascht wegen der in metallischen Gleitpaarungen gemachten Erfahrung, daß die Zutrittsmöglichkeit von Sauerstoff bzw. die Zugabe von elementarem Schwefel oder Schwefelorganoverbindungen die Gleitzone positiv beeinflußt.

In Kunststoff/Kunststoff-Gleitpaarungen wurde nun neuerlich ein überraschender Effekt gefunden, nämlich, daß gerade die eben erwähnten Polyphenylenoxyde bzw. Polyphenylensulfide (-Sulfone, etc.) unter bestimmten Bedingungen ausgezeichnete Gleitpartner darstellen. Dies ergab sich insbesondere in der Gleitpaarung gegenüber Kunststoffen die Stickstoff enthalten und weiters wurde ein positiver Effekt gefunden, wenn ein unpolares Medium in der Gleitstelle mitlief. Dabei scheint es nicht so sehr auf die (öfters feststellbare) schmierstoffähnliche Wirkung solcher unpolarer Medien anzukommen, sondern auf die elektrostatische Trennung der beiden anderen Gleitpartner.

Demnach bewähren sich tribologische Systeme, bei denen Kunststoffe gegen einander laufen, dann gut, wenn beide Hauptgleitpartner polar sind und außerdem die eingangs erwähnten Bedingungen erfüllen.

Ferner bewähren sich solche Systeme dann auch besonders, wenn zwischen den beiden Hauptgleitpartnern ein Hilfsgleitpartner mitläuft, der sich bezüglich Polarität anders als zumindest einer der Hauptgleitpartner verhält.

Im speziellen kann ein solches tribologisches System darin bestehen, daß die beiden Hauptgleitpartner polar sind, der Hilfsgleitpartner aber unpolar ist.

Umgekehrt können aber die beiden Hauptgleitpartner unpolar sein, wogegen der Hilfsgleitpartner polar ist und cyclische Gruppierungen enthält.

Unter »unpolar« ist in diesem Zusammenhang zu verstehen, daß der betreffende Kunststoff an sich unpolar ist (z. B. PE, PP, PS, PIB), oder durch innere gegenseitige Aufhebung von Einzelmolekül-Polaritäten nach außen unpolar wirkt (z. B. PTFE, PVDC).

Außer der bereits eingangs genannten Forderung nach wenigstens teilweise cyclischem Aufbau zumindest eines der Gleitpartner ist nünmehr auch erwähnt worden, daß unterschiedliche Polaritäten günstige Gleitreibungsverhältnisse und Ergebnisse (z. B. hinsichtlich Verschleiß-Minimierung) bewirken. Dieser Effekt ist momentan noch völlig überraschend.

Es ist denkbar, den vorerwähnten Hilfsgleitpartner in Form einer Zwischenbüchse oder Zwischenfolie auszubilden, die zwischen den Hauptgleitpartnern läuft. Dies ist insbesondere dann leicht zu verwirklichen, wenn der eine Hauptgleitpartner eine Gleitlagerbuchse und der andere Hauptgleitpartner eine auf der Welle aufgezogene Hülse ist.

Der Hilfsgleitpartner muß aber nicht unbedingt ein im Sinne von Maschinenelementen selbständig erfaßbarer Bestandteil sein. Es kann sich bei ihm auch beispielsweise um einen trockenen Schmierstoff (z. B. PE oder PTFE) handeln, der in einen oder in beide Hauptgleitpartner integriert (z. B. in Partikelform eingebaut) ist und während des Gleit- bzw. Verschleißvorgangs allmählich in die Gleitzonen abgegeben wird. Ebenso ist denkbar — und in Gleitpaarungen zwischen Kunststoffen und Metallen bereits realisiert — daß der Hilfsgleitpartner infolge der tribologischen Vorgänge abbaut oder sich — gegebenenfalls unter Mitwirkung von Abbauprodukten des Hauptgleitpartners — in Umwandlungsprodukte ändert, wobei solche Abbau- oder Umwandlungsprodukte gleitfördernde Materien ergeben, die im oben ausgeführten Sinne als Hilfsgleitpartner bezeichnet werden können. Wichtig ist auf jeden Fall, daß solche Abbau- bzw. Umwandlungsprodukte laufend in die Gleitzone abgegeben werden.

Den vorstehenden Ausführungen folgend, kann also der Hilfsgleitpartner durchaus aus einem Kunststoff bestehen. Ebenso denkbar ist aber, daß er ein sehr niedermolekularer Kunststoff ist.

Materialien für cyclische Gruppierungen aufweisende Kunststoff-Gleitpartner sind folgende Kettenpolymere:

a) einbindig aromatische Polymere (Beispiele siehe Tabelle 2a)

b) aromatische Polyheterocyclen (Halb-Leiterpolymere, »Semiladder-polymers«); (Beispiele siehe Tabelle 2b)

c) einbindige Polyheterocyclen (Beispiele siehe Tabelle 2c)

d) aromatische Leiterpolymere (»Ladder-Polymers«); (Beispiele siehe Tabelle 2d)

e) Copolymerisate hergestellt aus den Polymeren a) bis d) zugrundeliegenden Monomeren untereinander oder mit anderen Monomeren

f) Gemische der Polymeren a) bis d) untereinander oder mit anderen Polymeren.
(Wegen Einteilung und Terminologie siehe Hinweis auf Seite 1)

Diese Polymere werden tribologisch so gepaart, daß

— entweder beide Hauptgleitpartner polar sind und unterschiedliche cyclische Gruppierungen und/oder unterschiedliche Atome oder Gruppen, gebunden an die cyclische Gruppierung, enthalten, wobei der Hilfsgleitpartner unpolar ist,

— oder daß beide Hauptgleitpartner unpolar sind, der Hilfsgleitpartner polar ist und aus Polymeren a) bis f) besteht.

Wie eingangs bereits erwähnt, ist der Mitbestand von Atomen von Schwefel, Sauerstoff, Stickstoff und Phosphor von Bedeutung. In den untersuchten Paarungen wurden gute Resultate erzielt,

a) wenn einer der Gleitpartner in seinem Molekül Atome von Schwefel und einer der anderen Gleitpartner Atome von Sauerstoff enthielt,

b) wenn einer der Gleitpartner in seinem Molekül Atome von Schwefel und einer der anderen Gleitpartner Atome von Stickstoff enthielt,

c) wenn einer der Gleitpartner in seinem Molekül Atome von Sauerstoff und der andere Gleitpartner solche von Stickstoff enthielt,

d) wenn einer der Gleitpartner oder mehrere der Gleitpartner im Molekül 2, 3 oder 4 der Atomarten Schwefel, Sauerstoff, Stickstoff, Phosphor enthielt.

Unter den getesteten Kunststoff/Kunststoff-Gleitpaarungen haben sich als gute Gleitpartner folgende Systeme erwiesen:

a) daß einer der Hauptgleitpartner ein Polyphenylenoxyd, vorzugsweise ein Poly-2,6-dimethylphenylenoxyd (gegebenenfalls in Mischung mit anderen Polymeren, beispielsweise Polystyrol) ist und der andere Hauptgleitpartner entweder ein aromatisches Polyamid, oder ein Polyimid oder ein Polyamidimid oder ein Polybenzimidazol, oder ein Polyalkylenterephthalat ist und der Hilfsgleitpartner aus Polyalkylen, bevorzugt Polyäthylen, oder Polytetrafluoräthylen besteht.

b) daß einer der Hauptgleitpartner ein schwefelhaltiges Polymeres, vorzugsweise ein Polyarylsulfon oder ein Polyarylsulfid oder ein Polyarylsulfonat und der andere Hauptgleitpartner
entweder ein aromatisches Polyamid oder ein Polyimid
oder ein Polyamidimid oder ein Polybenzimidazol
oder ein Polyalkylenterephthalat (z. B. Polyäthylenterephthalat oder Polybutylenterephthalat)
ist und der Hilfsgleitpartner aus Polyalkylen, bevorzugt Polyäthylen, oder aus Polytetrafluoräthylen besteht.

Bei den erfindungsgemäßen Gleitpartnern kann es sich entweder um Polymere im reinen Zustand handeln, aber auch um Polymere, die bekannte Additive, Füllstoffe, Schmierstoffe und Verstärkungsstoffe enthalten. Solche Zusätze können Kristallisationskeime, Verarbeitungshilfsmittel, Alterungsschutzmittel, Hitzestabilisatoren, anorganische und organische Trockenschmierstoffe, Fasern aus beispielsweise Glas, Bor, Kohlenstoff, ferner Talkum, Glasperlen, Graphit usw. sein.

Nach einigen der dargelegten Gestaltungsarten soll ein Hilfsgleitpartner als selbständiges Element mitlaufen oder in wenigstens einen der Hauptgleitpartner derart integriert sein, daß Teile von ihm — oder Abbauprodukte bzw. Umwandlungsprodukte von ihm — laufend in die Gleitzone abgegeben werden.

Dazu haben sich im Laufe von Versuchsreihen folgende Kombinationen ergeben:

| | Hauptgleitpartner I | | Hauptgleitpartner II | |
|---|---|---|---|---|
| | polar, cyclisch A | | polar, cyclisch B | |
| 1.1 | mit Hilfspartner | unpolar | kein Hilfspartner, | — |
| 1.2 | kein Hilfspartner | — | mit Hilfspartner | unpolar |
| 2.0 | Hilfspartner (a), | unpolar | Hilfspartner (a), | unpolar |
| 3.1 | Hilfspartner (a), | unpolar | Hilfspartner (b), | unpolar |
| 3.2 | Hilfspartner (b), | unpolar | Hilfspartner (a), | unpolar |

| | Hauptgleitpartner I | Hilfspartner | Hauptgleitpartner II | Hilfspartner |
|---|---|---|---|---|
| 4.1 | unpolar (a) | pol.cyc. A | unpolar (a) | — |
| 4.2 | unpolar (a) | — | unpolar (a) | pol.cyc. A |
| 5.1 | unpolar (a) | pol.cyc. A | unpolar (a) | pol.cyc. B |
| 5.2 | unpolar (a) | pol.cyc. B | unpolar (a) | pol.cyc. A |
| 6.1 | unpolar (a) | pol.cyc. A | unpolar (b) | — |
| 6.2 | unpolar (a) | — | unpolar (b) | pol.cyc. A |
| 7.1 | unpolar (a) | pol.cyc. A | unpolar (b) | pol.cyc. B |
| 7.2 | unpolar (a) | pol.cyc. B | unpolar (b) | pol.cyc. A |

Bei Betrachtung obiger Tabellen mögen auf den ersten Blick die jeweils mit eingetragenen Umkehrungen der Paarungen unnötig erscheinen. Damit sollte jedoch auf die tribotechnische Erscheinung hingewiesen werden, daß bei einer Paarung X/Y meist sehr unterschiedliche Ergebnisse erzielt werden, je nachdem ob X oder Y der stehende oder der sich bewegende Gleitreibpartner ist.

Darüber hinaus hat sich bei den erfindungsgemäßen Gleitpaarungen ein Unterschied ergeben, je nachdem ob beispielsweise der Partner A die Komponente (a) und der Partner B die Komponente (b) enthält, also wenn Aa/Bb gepaart ist, oder ob ein Komponententausch durchgeführt wurde und nunmehr Ab/Ba gepaart sind.

Zusammenfassend sind somit die Hauptmöglichkeiten festzuhalten,

— daß ein cyclischer Hauptgleitpartner einen unpolaren Hilfsgleitpartner enthalten kann und sein anderer Hauptgleitpartner keinen,

4

— daß beide cyclischen Hauptgleitpartner einen unpolaren Hilfsgleitpartner enthalten können,

— daß diese Hilfsgleitpartner gleich sind,

— daß sie unterschiedlich sind,

— daß ein unpolarer Hauptgleitpartner einen polaren, cyclischen Hilfsgleitpartner enthalten kann und sein anderer Hauptgleitpartner keinen,

— daß beide einen cyclischen, polaren Hilfsgleitpartner enthalten,

— daß diese Hilfsgleitpartner gleich sind,

— daß sie unterschiedlich sind, oder

— daß, sofern der Hilfsgleitpartner als selbständiger Lagerbauteil mitläuft, dieser analog zu obigem oder in Kombination mit obigem gepaart ist.

Ferner muß noch erwähnt werden, daß ein unpolarer Gleitpartner auch aus mehreren Polymeren bestehen kann, beispielsweise aus einem Gemenge von zwei oder mehreren der Kunststoffe PE, PP, PIB, PS, PTFE, PVDC, die wiederum in verschiedenen Formen vorliegen können, wie beispielsweise Pulver, Körner, Fasern, Filzen, Geweben, Geflechten.

Auch eine Vermischung dieser Formen bis hin zur Gestaltgebung eines Bauteiles ist möglich, beispielsweise ein Filz aus PTFE Fasern, der durch dazwischengestreutes und anschließend verschmolzenes PS-Pulver gebunden ist, oder eine PP-Folie, die Körner von UHMWPE, PIB oder PVDC enthält.

Diese letztgenannten Aufbauarten sind insbesondere dann denkbar, wenn der Hilfsgleitpartner nicht in einem oder beiden Hauptgleitpartnern integriert ist, sondern, wie ebenfalls beansprucht, als Bauteil mit Eigengestalt als Zwischenbüchse oder Zwischenfolie zwischen den Hauptgleitpartnern läuft oder selbst Hauptgleitpartner ist.

Das im vorstehenden für Formenkombinationen in unpolaren Partnern Gesagte gilt im umgekehrten Sinne natürlich auch für die polaren Partner.

So kann beispielsweise ein aus PPS geformtes Element Pulver oder Fasern aus PAN und/oder PETP enthalten und ein dagegenlaufendes aus PI oder PAI geformtes Element solche aus PAA und/oder PA.

Es ist angebracht, an dieser Stelle neuerlich darauf zu verweisen, daß es sich bei den erfindungsgemäßen Gleitpartnern um Kunststoff im reinen Zustand handeln kann, aber auch um Kunststoffe welche die aus dem Stand der Technik bekannten Additive, Füllstoffe, Schmierstoffe und Verstärkungsstoffe enthalten.

Solche Zusatzstoffe sollen so ausgewählt werden, daß sie den erfindungsgemäßen Unterschied des chemischen Aufbaues der Gleitpartner oder deren Polaritätsunterschied vorzugsweise fördern, zumindest nicht wesentlich beeinträchtigen. Dies ist in den obigen Beispielen sehr strikt der Fall.

Schließlich kann der Hilfsgleitpartner auch in Makrostruktur in den Hauptgleitpartner eingearbeitet sein. Beispiele dazu zeigen die Fig. 1 bis 12.

In Fig. 1 wird eine Lager-Halbschale dargestellt in deren Grundkörper (1) die unterschiedlichen Hilfsgleitpartner (2) und (3) streifenförmig quer zur Laufrichtung der (nicht gezeichneten) Welle eingelassen sind.

Fig. 2 zeigt einen Hilfsgleitpartner (4) der in eine Hülse (5) spiralig eingearbeitet ist, welche auf eine Welle (6) aufgezogen ist.

Fig. 3 stellt schematisch die Paarung eines Gleitpilzes (7) mit einer Gleitplatte (8) in Seitenansicht dar.

Fig. 4 zeigt in Draufsicht die Lauffläche des Gleitpilzes (7), der aus dem Hauptgleitpartner I (9) und einem Hilfsgleitpartner (10) besteht, der kreuzförmig und diagonal zur Laufrichtung angeordnet ist. Die Gleitplatte (8) ist in Fig. 5 als Draufsicht auf deren Lauffläche zu sehen. Sie weist die Rillen (11) auf.

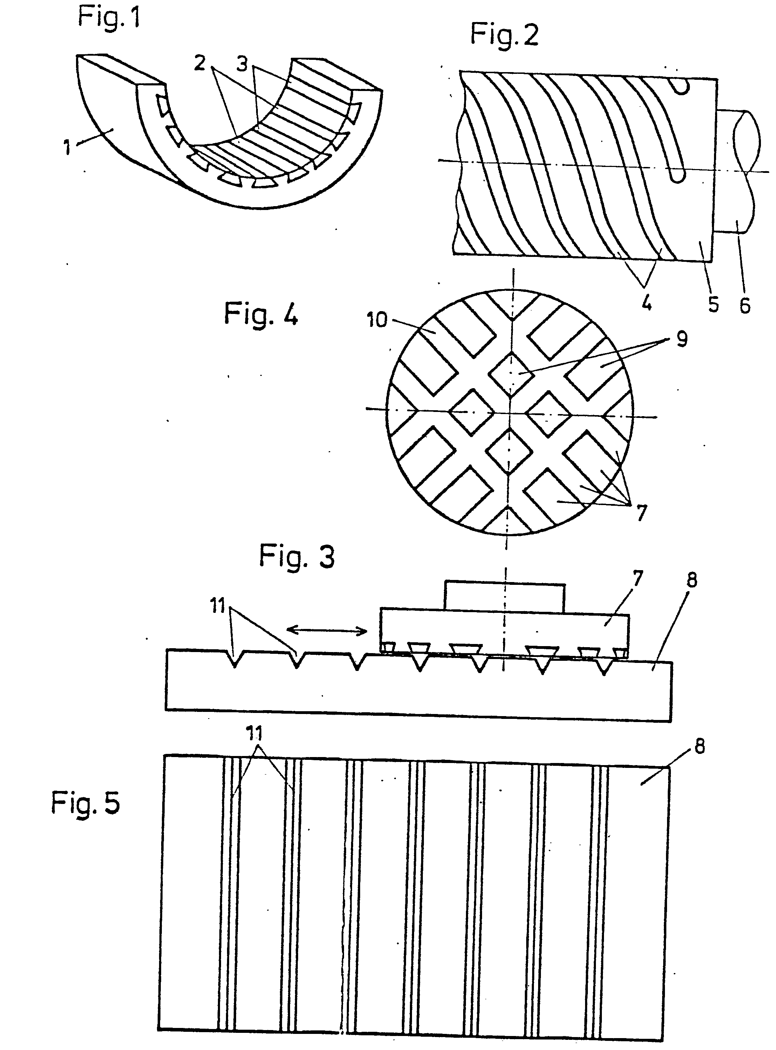

Wie Fig. 4 zeigt, ragt die Oberfläche des Hauptgleitpartners (9) noch inselartig in die Gleitfläche hinein. Eine Umkehrung ist ebenfalls möglich. In diesem Falle würde der Hilfsgleitpartner inselartig in die Gleitoberfläche hineinragen.

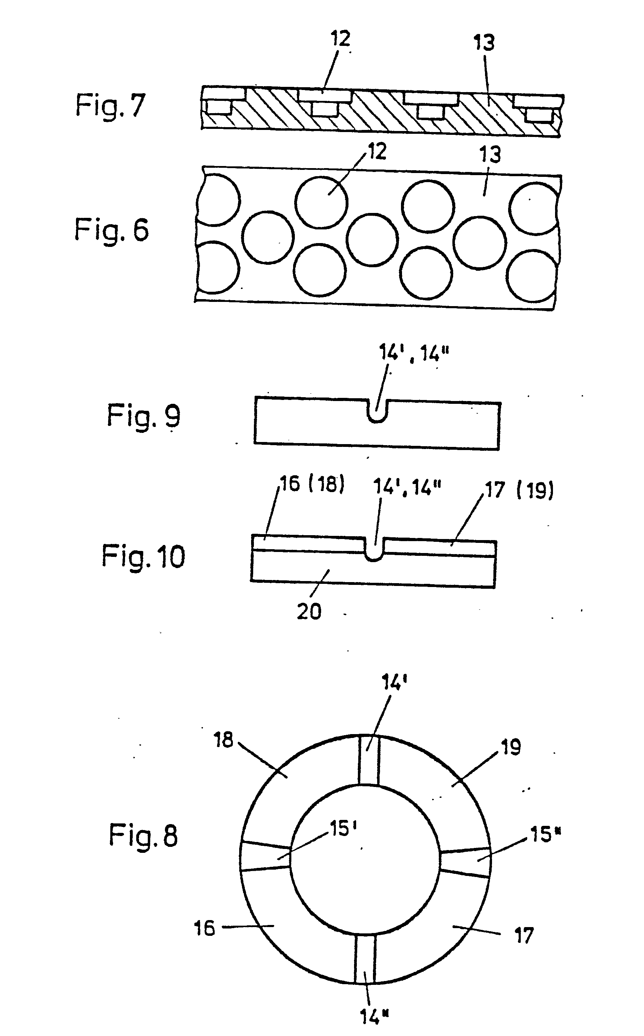

Fig. 6 zeigt eine Gleitplatte (13) mit inselartigen, runden Scheiben (12) aus einem Partnerwerkstoff in Draufsicht und Fig. 7 im Schnitt.

In Fig. 8 ist eine Ringscheibe zur Aufnahme axial wirkender Gleitreibungslasten dargestellt, und zwar in Draufsicht, wobei dargestellt ist, daß die Schlitze sowohl parallel (14', 14'') als auch strahlig (15', 15'') begrenzt sein können.

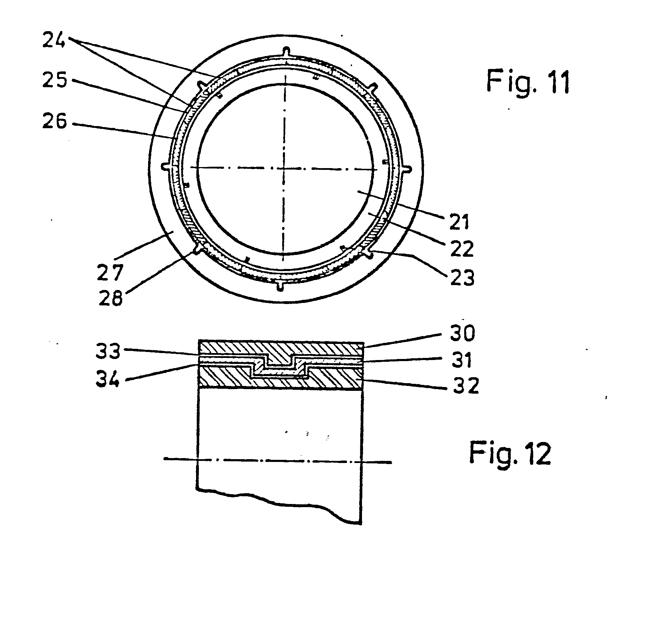

In den Fig. 9 und 10 ist die Ringscheibe in Seitenansicht zu sehen, wobei die Fig. 9 eine einteilige Scheibe zeigt, dagegen die Fig. 10 eine solche, die aus dem Bodenkörper (20) und den durch die Schlitze 14 und 15 getrennten Gleit-Segmenten, die — um die Herstellungsmöglichkeit aus zwei oder vier verschiedenen Materialien zu verdeutlichen, auch mit den verschiedenen Bezeichnungen (16), (17), (18) und (19) versehen sind.

Fig. 11 ist eine Prinzipskizze für ein Querlager unter Verwendung einiger erfindungsgemäßer Details:

Auf eine Welle (21) ist als Hauptgleitpartner I eine mitumlaufende Hülse (22) aufgezogen, die in die Gleitoberfläche vordringende Leisten (23) aus einem anderen Werkstoff trägt. Der in diesem Beispiel als Zwischenbüchse (24) mitlaufende Hilfsgleitpartner ist aus zwei Materialien zusammengesetzt, was in der Zeichnung mittels der Abschnitte (25) und (26) schematisiert wird. Als Hauptgleitpartner II ist die Außenbuchse (27) vorgesehen, die quer zur Umlaufrichtung einige Schlitzungen (28) trägt.

Schließlich ist in Fig. 12 eine der zahlreichen Möglichkeiten zur Herstellung von Kunststoff-Mehrlagen-Gleitpartnern skizziert. In eine vorweg gespritzte oder gepreßte Buchse (30) wird eine Zwischenbuchse (31) nachgespritzt oder gepreßt, der eine Wellenhülse (32) folgt. Die Spalte (33) und (34) entstehen durch die Erstarrungs- und Auskühlschrumpfungen der nacheinander folgenden Buchsen- bzw. Hülsen-Lagen.

Ähnliche Ausführungsformen, wie sie in den Fig. 1 bis 11 dargestellt werden, sind aus dem Stand der Technik bekannt, wenn sie auch dort mit anderen Materialien und mit anderer Zielrichtung bzw. Absicht ausgeführt werden. Mit den erfindungsgemäßen Materialkombinationen werden andere Zwecke erreicht. Vermutlich kommt es dabei mittels der im Gleitreibungsvorgang zwischen Kunststoffen abwechselnden Materialpaarungen zum Abreißen von elektrischen Ladungen bzw. Polarisationen oder mittels der Materialwechsel in den Gleitoberflächen bzw. mittels der Schlitze zu Ladungstrennungen, die eine der Möglichkeiten einer elektrostatischen Aufladung darstellen.

Es werden also erfindungsgemäß — in Anlehnung an aus dem Stand der Technik bekannte Bauarten — in einen oder beide Hauptgleitpartner ein oder einige Hilfsgleitpartner in Makrostruktur eingelassen, wobei die Hilfsgleitpartner bevorzugt streifenförmig, spiralig oder kreuzartig oder inselartig in die Gleitfläche hineinragend angeordnet sind und/oder einzelne oder mehrere oder alle der Gleitflächen durch Schlitze unterbrochen sind, die vorzugsweise streifenartig quer zur Gleitrichtung verlaufen oder spiralig oder kreuzförmig angeordnet sind. Diese Schlitze können auch mit Leisten aus einem anderen Werkstoff ausgefüllt sein, der den erfindungsgemäßen Paarungsvorschriften entspricht.

Auch die Hauptgleitpartner können an ihrer Oberfläche oder durchgehend von solchen Schlitzen oder Materialwechseln unterteilt sein.

Es soll noch ergänzt werden, daß in tribologischen Systemen sich mechanische, energetische und chemische Ursachen und Wirkungen dicht überlagern. So ist beispielsweise bekannt, daß gewisse Prozesse in Autoklaven nicht ablaufen, die aber unter gleichem Druck und gleicher Temperatur tribochemisch durchaus vorkommen. Es ist also durchaus denkbar, daß in einem tribologischen System an Mikro-Orten und Mikro-Zeiten die in der vorangegangenen Beschreibung erwähnten Atome (oder solche Atome enthaltende Molekülbruchstücke oder Umwandlungsprodukte) frei gesetzt werden, die sich für den Gleitreibungsvorgang positiv auswirken.

Die vorstehende Beschreibung ist hauptsächlich auf Gleitlager ausgerichtet, bei welchen sich in irgendeinem Gehäuse die Kunststoff-Gleitlagerbuchse befindet, in der sich eine mit einer Kunststoffhülse überzogene Welle dreht. Erwähnt sei, daß das geschilderte System auf alle tribologischen Gleitreibungspaarungen anwendbar ist, also beispielsweise auf Achse/Rad, Achse/Hebel, Hebel/Nocke, Flachgleitführungen, Zahnradpaarungen, Wälzlageranwendungen, Wälzlagerkäfige, Gleitdichtungen, etc.

## Abkürzungsverzeichnis

Die (großteils genormten) Abkürzungen bedeuten:

| | |
|---|---|
| CF | = Kohle-Fasern |
| GF | = Glasfaser |
| HDPE | = High-density-polyethylene |
| PA | = Polyamid |
| PA 6 | = Polyamid aus Caprolactam |
| PA 66 | = Polyamid aus Hexamethylendiamin und Adipinsäure |
| PA 11 | = Polyamid aus Aminoundecansäure |
| PA 12 | = Polyamid aus Laurinlactam |
| PAA-F | = Polyarylamid-Faser |
| PATP | = Polyalkylenterephthalat (z. B. PBTP, PBTP) |
| PAN | = Polyacrylnitril |
| PBTP | = Polybutylenterephthalat |
| PC | = Polycarbonat |
| PE | = Polyethylene (Polyäthylen) |

PETP      = Polyäthylenterephthalat

POM       = Polyoximethylen (Polyazetal)

POM hp    = Polyoximethylen Homopolymerisat

POM cp    = Polyoximethylen Copolymerisat

PPO       = Polyphenylenoxid

PPO/PS    = Polyphenylenoxid (meist Poly-2,6dimethylphenylenoxid) im Gemisch mit Polystyrol

PPS       = Polyphenylensulfid

PPSU      = Polyphenylensulfon

PSUL      = Polysulfon

PU        = Polyurethan

PTFE      = Polytetrafluoräthylen

UHMWPE    = Ultrahigh-molecular-weight-Polyethylene

$MoS_2$   = Molybdändisulfid

PAA       = Polyarylamid

PI        = Polyimid

PIB       = Polyisobutylen

PP        = Polypropylen

PS        = Polystyrol

PVDC      = Polyvinylidenchlorid

PE-F      = PE-Fasern

PTFE-F    = PTFE-Fasern

PAI       = Polyamidimid

PES       = Polyäthersulfon

PBIA      = Polybenzimidazol

Tabelle 1

Vereinfachte Übersicht über einige Ergebnisse mit Kunststoff/Kunststoff-Gleitpaarungen auf einem RMH-Querlager-Prüfstand

| Paarung | | | Durchschnittsbewertung hinsichtlich Verschleiß, Reibwert und Belastbarkeit | | |
|---------|---|---|------|-----|-----|
| Hauptpartner I | Hauptpartner II | Hilfspartner (i), (z) | sehr gut | gut | für bestimmte Bedingungen |
| PPS+GF | PAA | keiner | | + | |
| PPS+GF | PAA | div.unpolar (i) | + | | |
| PPS+GF | PAI | keiner | | | + |
| PPS+GF | PAI | div.unpolar (i) | | + | |
| PPS+GF | PI | keiner | | + | |
| PPS+GF | PI | div.unpolar (i) | + | | |
| PPSU | PAA | keiner | | | + |
| PPSU | PAA | PTFE–F+PS (z) | + | | |
| PES | PC | – | | | + |
| PES | PC+PAA–F | – | | + | |
| PES | PC | PE+PTFE (i) | + | | |
| PES | PETP | – | | | + |
| PES | PETP+PE | – | | + | |
| PPO | PC | PP+PIB (i) | | | + |
| PPO | PC | PP+PIB (z) | | + | |
| PAA | PC | PE (i) | + | | |
| PPS+PAA–F | PPO | PS (i) | | + | |
| PBTP+PE | PC | PVDC–F +PS (z) PTFE–F | | + | |
| PTFE gefüllt | PTFE gefüllt | PI (z) | + | | |
| PP(+PIB+PE) | PP(+PIB+PE) | PPS+PAA–F (z) | | | |

(i) = Hauptpartner integriert.
(z) = separate Zwischenbuchse.

8

Tabelle 2

Einleitung für cyclische Gruppierungen enthaltende Polymere nach deren Bindungs-Struktur:

a)  Einbindig aromatische Polymere

Schema: $X_1$—⟨⟩—$X_2$—⟨⟩—$X_3$—⟨⟩— ...

b)  aromatische Polyheterocyclen (Halb-Leiterpolymere, ›semi-ladder-polymers‹)

Schema: ...

oder z. B.: ...

c)  einbindige Polyheterocyclen

Schema: X—⟨⟩—⟨⟩— ...

oder z. B.: ...

d)  aromatische Leiterpolymere (›ladder polymers‹)

Schema: ...

Tabelle 2a

Beispiele einbindiger aromatischer Polymere

Polyaryloxyde

z. B. Polypropylenoxyd  —⟨⟩—O—

z. B. Polyaryläther  —$CH_2$—⟨⟩—O—⟨⟩—$CH_2$—O—⟨⟩—O—

z. B. Poly-2,6-dimethylphenylenoxyd

Polyarylsulfide

z. B. Polyphenylensulfid

Polyarylsulfone
Polyaryläthersulfone
Polyarylsulfonate

mit beispielsweisenden Formeln

Polyarylamine

Prinzipformel

Polyazophenylene

Prinzipformel

Polyazomethine

Prinzipformel

Polyarylcarbonate

Beispielsformel

Polyarylester (Polyarylate)

Beispielsformeln

(weitere siehe beispielsweise in ›Behr, Hochtemperaturfeste Kunststoffe, Hanser-Verlag, 1969)

Polyarylamide

Beispielsformel

## Tabelle 2b

Beispiele von aromatischen Polyheterocyclen (Halb-Leiterpolymere, »semi-ladder-polymers«)

| | |
|---|---|
| Polyimide | Polytetrazole |
| Polyesterimide | Polyhydantione |
| Polyamidimide | Polydiketopiperazine |
| Polythiodiazopyrazinimide | Polychinoxaline |
| Polyimidazole | Polychinoxalindione |
| Polyoxazole | Polychinoxalone |
| Polythieazole | Polyoxazine |
| Polyborimidazole | Polyoxazinone |
| Polytetrazopyrene | Polyimidazopyrolone |
| Polyhydrazide | Polyimidazobenzophenanthroline |
| Polyoxdiazole | Polyisoindolochinazolindione |
| Polydiazole | Polybenzimidazole |
| Polytriazole | Polyborimidazole |
| Polyoxazoline | Polyoxazole |
| Polyoxazolidone | Polythioazole |
| Polypyrazole | Polytetrazopyrene |

Hinsichtlich einiger Beispiele für Polyimide und Polyazoverbindungen und deren Copolymerisate wird ergänzend auf »Behr, Hochtemperaturfeste Kunststoffe, Hanser-Verlag 1969« hingewiesen.
Einige Beispiele solcher Verbindungen sind in der Tabelle 2b dargestellt.

Tabelle 2b

Struktur-Beispiele aus einigen Polyimid-Gruppen

Normales Polyimid

Wasserstoff-freies Polyimid

Polybismaleinimid

Polyesterimid

Tabelle 2b

Struktur-Beispiele einiger Polybenzimidazole

0 005 531

14

Tabelle 2c

Beispiele einbindiger Polyheterocyclen

| Polyhydrazide | Polytriazole | Polypyrazole |
|---|---|---|
| Polyoxdiazole | Polytetrazole | Polyoxazoline |
| Polythiadiazole | Polyhydantione | Polydiketopiperazine |

Tabelle 2d

Beispiele aromatischer Leiterpolymere (»ladder-polymers«)

| | |
|---|---|
| Polychinoxaline | einige Polyamidimide |
| Polychinoxalindione | Polybenzimidazole |
| Polychinoxalone | Polyoxazole |
| Polyoxazine | Polythiazole |
| Polyoxazinone | Polyborimidazole |
| Polyimidazobenzophenanthrolin | Polytetrazopyrene |
| Polyisoindalochinazolindione | Polypyrazole |
| Polyimidazopyrolone | Polyhydrazide |
| cyclisiertes Polyacrylnitril | Polyoxdiazole |
| einige Polyimide | Polytriazole |
| einige Polyesterimide | Polypyrone |

Tabelle 3

Erklärungen zum »Abkürzungsverzeichnis« sowie zu den Tabellen und zu den Kunststoff-Bezeichnungen im Text

A) Allgemein

Es ist insbesondere in der US-Patentliteratur üblich, die verwendeten Kunststoffe chemisch genau zu definieren und möglichst auch zu vermerken, aus welchen chemischen Ausgangsprodukten sie entstehen.

Wegen der sehr vielen in dieser Patentbeschreibung genannten Materialien ist dies hier nicht möglich. Es wird daher ganz allgemein ausgesagt, daß die angegebenen chemischen Bezeichnungen, sofern sie eine breite chemische Klasse umschreiben, so zu verstehen sind, daß

a) bei den Hauptgleitpartnern jene Produkte aus der jeweiligen Klasse gemeint sind, die üblicherweise in der Kunststofftechnik verwendet werden und sich zur Herstellung von Formkörpern nach den Methoden der Kunststoffverarbeitung eignen,

b) bei den Hilfsgleitpartnern im allgemeinen ebenfalls die in »a)« beschriebenen Produkte gemeint sind.

B) Genormte und branchenübliche Kurzzeichen

Die im »Abkürzungsverzeichnis« angegebenen Kurzzeichen und auch die dort sowie im Beschreibungstext und in den Tabellen verwendeten wörtlichen chemischen Bezeichnungen sollen

a) alle jene Kunststoffe betreffen, die in den Normen laut DIN, ASTM und ISO mit diesen Kurzzeichen und den wörtlichen chemischen Bezeichnungen gekennzeichnet sind bzw. unter dieser Terminologie in der Kunststoffverarbeitung üblicherweise angewendet werden,

b) auch jene Kunststoffe kennzeichnen, deren Kurzzeichen zwar noch nicht genormt sind, aber als Kurzzeichen oder in der wörtlichen chemischen Bezeichnung unter Kunststoff-Fachleuten gebräuchlicherweise für jene Gruppen von Materialien verwendet werden, die in der Kunststofftechnik zur Herstellung von Kunststoff-Erzeugnissen angewendet werden.

C) Handelsnamen
Zur weiteren Erklärung der verwendeten Kurzzeichen und wörtlichen chemischen Bezeichnungen werden für die damit gekennzeichneten Kunststoffe im nachfolgenden (unvollständig) einige Handelsnamen angegeben:

HDPE = High-density-polyethylene: MARLEX, HOSTALEN, LUPOLEN

PA 6 = Polyamid aus Caprolactam: GRILON, ULTRAMID-B

PA 66 = Polyamid aus Hexamethylendiamin und Adipinsäure: ZYTEL, ULTRAMID-A, NYLON 66

PA 11 = Polyamid aus Aminoundecansäure: RILSAN

PA 12 = Polyamid aus Laurinlactam: GRILAMID, VESTAMID

PAA-F = Polyarylamid-Faser: KEVLAR, NOMEX, ARENKA

PBTP = Polybutylenterephthalat: ARNITE-T, CELANEX, ULTRADUR

PC = Polycarbonat: MACROLON, LEXAN

PE = Polyethylene: LUPOLEN, HOSTALEN, ALATHON

PETP = Polyäthylenterephthalat: ARNITE-A

POM hp = Polyoximethylen Homopolymerisat: DELRIN

POM cp = Polyoximethylen Copolymerisat: HOSTAFORM-C, KEMATAL

PPO = Polyphenylenoxid: »PPO« (General Electric)

PPO/PS = Polyphenylenoxid (meist Poly-2, 6-dimethylphenylenoxid) im Gemisch mit Polystyrol: NORYL

PPS = Polyphenylensulfid: RYTON

PPSU = Polyphenylensulfon: BAKELITE-P-1700, POLYMER-360, UDEL

PU = Polyurethan: ELASTOLLAN, DESMOPAN

PTFE = Polytetrafluoräthylen: TEFLON, HOSTAFON, FLUON

UHMWPE = Ultrahigh-molecular-weigh-Polyethylen: HOSTALEN-GUR

PAA = Polyarylamid: NOMEX, Q-2, TROGAMID-T

PI = Polyimid: VESPEL, SP-POLYMER, POLYMER-XPE, KINEL

PIB = Polyisobutylen:

PP = Polypropylen: HOSTALEN PP, DAPLEN

PS = Polystyrol: STYRON, HOSTYREN, BASF-POLYSTYROL

PVDC = Polyvinylidenchlorid: SARAN

PAI = Polyamidimid: TORLON, A-I-POLYMER

PES = Polyäthersulfon: VICTREX
Poly-p-xylylen: PARYLEN
Polyimidazopyrolone: PYRONE
Polybenzimidazole: IMIDITE, AF-R-100

Tabelle 4

Zur besseren Verdeutlichung der Forderungen laut den Patentansprüchen, werden im folgenden einige Beispiele für die erfindungsgemäßen tribologischen Paarungen genannt.

A)  Variante POLAR/UNPOLAR/POLAR
    Forderungen laut den Patentansprüchen:
    Beide Hauptgleitpartner sind polare Kettenpolymere und enthalten unterschiedliche cyclische Gruppierungen und/oder unterschiedliche Atome oder Gruppen als Ankoppelungen an die cyclische Gruppierung.
    In der cyclischen Gruppierung des Moleküls oder direkt daran gebunden, befinden sich zumindest in einem der Hauptgleitpartner Atome von Stickstoff, Phosphor, Sauerstoff und/oder Schwefel. Der Hilfsgleitpartner ist unpolar.
    Beispiele solcher Paarungen sind nachstehend beschrieben.

B)  Variante UNPOLAR/POLAR/UNPOLAR
    Forderungen laut den Patentansprüchen:
    Beide Hauptgleitpartner sind unpolar.
    Der Hilfsgleitpartner ist ein polares Kettenpolymer und enthält cyclische Gruppierungen.
    In der cyclischen Gruppierung des Moleküls oder direkt daran gebunden, befinden sich Atome von Stickstoff, Phosphor, Sauerstoff und/oder Schwefel.
    Beispiele solcher Paarungen sind nachstehend beschrieben.


A) Beispiele der Paarung POLAR/UNPOLAR/POLAR


Hauptgleitpartner


Die beiden polaren Hauptgleitpartner bestehen aus Homopolymerisaten oder Copolymerisaten oder Polymergemischen und können auch Schmierstoffe, Füllstoffe (z. B. organische und anorganische Pulver) und/oder Verstärkungsstoffe (z. B. organische und anorganische Fasern, Filze, Gewebe) enthalten. Als gute Basismaterialien für die Hauptgleitpartner haben sich gezeigt:


Tabelle 4a

Gruppe »CS«:
    PPS, PPS + PES, PPS + PPSU, PES, PES + PPSU, PPSU

Gruppe »CO«:
    PPO, PPO + PS, PC, PATP

Gruppe »NCO«:
    PU mit cyclischen Gruppierungen in der Kette,
    PU mit cyclischen Gruppierungen in der Kette + lineares PU,
    PU mit cyclischen Gruppierungen in der Kette + POM

Gruppe »CN«:
    PAA, PAA + PA, PAI, PAI + PA, PI, PI + PAI, PI + PAA, PI + PA, PBIA, PBIA + PI

Es wurden folgende Resultate erzielt:

Tabelle 4b

| Hauptgleitpartner 1 | Hauptgleitpartner 2 | Ergebnis |
|---|---|---|
| Ein Kunststoff | Ein Kunststoff | |
| ... aus der Gr. »CS« | ... aus der Gr. »CN« | sehr gut |
| ... aus der Gr. »CO« | ... aus der Gr. »CN« | sehr gut |
| ... aus der Gr. »NCO« | ... aus der Gr. »CN« | gut |
| ... aus der Gr. »CS« | ... aus der Gr. »CO« | gut |
| ... aus der Gr. »CS« | ... aus der Gr. »NCO« | gut/sehr gut |
| ... aus der Gr. »CO« | ... aus der Gr. »NCO« | gut |
| Ein Kunststoff aus einer dieser Gruppen | anderer Kunststoff aus der gleichen Gruppe | je nach Anforderungen gut bis ungenügend |

Erfolgreich ist es auch, die oben genannten Kunststoffgruppen, oder einzelne verschiedene Kunststoffe aus einer einzigen dieser Gruppen, oder einzelne dieser Kunststoffe zusammen mit anderen Kunststoffen, in einem oder in beiden Hauptgleitpartnern zu kombinieren. Es ist vorteilhaft, diese Kombination in Makrostruktur auszuführen. Dazu werden — in Anlehnung an aus dem Stand der Technik bekannte Bauarten — in einen oder beide Hauptgleitpartner chemisch andersartige jedoch in ihrer Polarität dem Hauptgleitpartner ähnliche Kunststoffe in Makrostruktur eingelassen, wobei diese Kunststoffe bevorzugt streifenförmig, spiralig oder kreuzartig oder inselartig in die Gleitfläche hineinragend angeordnet werden, oder als Partikel, Fasern, Filze, Gewebe eingelagert sind. Beispiele sind in Tabelle 4c aufgezählt.

Tabelle 4c

Beispiele von Mehrstoff-Kombinationen polarer Polymerer, aus denen ein Hauptgleitpartner bestehen kann. (Die Bedeutung der Kurzzeichen CS, CO, NCO und CN ist im Sinne der Tabelle 4a zu verstehen)

| In einer Matrix aus einem Kunststoff der Gruppe | ist eingelassen bzw. eingelagert ein Kunststoff (oder einige Kunststoffe) der Gruppe (bzw. Gruppen) |
|---|---|
| CS | CS, jedoch in anderer chemischer Struktur als der Matrix-Kunststoff, CO, NCO, CN, PA, POM, PVC, PAN, PMMA |
| CO | CO, jedoch in anderer chemischer Struktur als der Matrix-Kunststoff, CS, NCO, CN, PA, POM, PVC, PAN, PMMA |
| NCO | NCO, jedoch in anderer chemischer Struktur als der Matrix-Kunststoff, CS, CO, CN, PA, POM, PVC, PAN, PMMA |
| CN | CN, jedoch in anderer chemischer Struktur als der Matrix-Kunststoff, CS, CO, NCO, PA, POM, PVC, PAN, PMMA |
| PA oder POM oder PVC oder PAN oder PMMA | CS, CO, NCO, CN. |

Es ist räumlich unmöglich, im Rahmen der vorliegenden Blätter sämtliche durch die Tabelle 4c vorgegebenen Mehrstoff-Kombinationen aufzuzählen, oder gar sämtliche Paarungsmöglichkeiten zu nennen, wenn einer oder beide Hauptgleitpartner aus solchen Mehrstoff-Kombinationen bestehen. In Tabelle 4d können daher nur einige wenige Beispiele genannt werden.

Tabelle 4d

Beispiele von Paarungen polarer Hauptgleitpartner, von denen zumindest einer eine Mehrstoff-Kombination ist.

(c) = vollcyclisches oder cyclische Gruppen enthaltendes Kettenpolymer.
(l) = lineares, keine cyclischen Gruppen enthaltendes Polymer.

| Hauptgleitpartner 1 | | | | Hauptgleitpartner 2 | | | |
|---|---|---|---|---|---|---|---|
| Die Matrix besteht aus | | Die Einlagerung besteht aus | | Die Matrix besteht aus | | Die Einlagerung besteht aus | |
| der Gruppe | und ist | der Gruppe | und ist | der Gruppe | und ist | der Gruppe | und ist |
| CS | PPSU (c) | CS | PPS-P (c) | CN | PI (c) | CN | PAA-F (c) |
| CS | PPS (c) | CN | PAA-F (c) | CN | PI (c) | CN | PA 12 (l) |
| CS | PPS (c) | Glasfasern | | CN | PI (c) | NCO | PU-R (c) |
| CS | PES (c) | CN | PA 66-R (l) | CO | PPO (c) | CO | PETP-R (c) |
| CS | PES (c) | CN | PAI-R (c) | CO | POM (l) | CO | PBTP-R (c) |
| CN | PA 11 (l) | CN | PAA-F (c) | CO | POM (l) | CO | PETP-F (c) |
| | | NCO PU-l | | | | | |
| CN | PAA (c) | plus CO POM-l | −R | CS | PES (c) | − | − |
| | | CN | PA 6-R | | | | |
| CN | PBIA (c) | plus CN | PAA-F | CO | PC (c) | CS | PPS-K (c) |
| CO | PC (c) | CO | PBTP-R (c) | CS | PPS (c) | CN | PAA-F (c) |
| CO | PBTP (c) | CCl | PVC-R (l) | CN | PAN (l) | CS | PPS-K (c) |
| CO | PPO (c) | CO | PMMA-R (l) | NCO | PU (c) | CN | PA 12-R (l) |

Die in Tabelle 4d gebrauchten, bisher noch nicht erklärten Abkürzungen bedeuten:

-F = Fasern, Filze, Matten, Gewebe, Gewirke

-K = Körner, ungefähr im Größenbereich von 0,1 bis 3 mm

-P = Pulver, ungefähr im Größenbereich von 0,001 bis 0,1 mm

-R = Raumfüllungen, die offengelassene Räume des Hauptgleitpartners bevorzugt streifenförmig, spiralig, kreuzartig oder inselartig ausfüllen.

Ergänzend zu Tabelle 4 d ist noch zu erwähnen, daß die Forderung, die Hauptgleitpartner sollen unterschiedliche cyclische Gruppierungen und/oder unterschiedliche Atome oder Gruppen, gebunden an die cyclische Gruppierung enthalten, auch dann erfüllt ist, wenn die Hauptgleitpartner mehrere solcher Verbindungen enthalten und wenigstens zwei davon unterschiedlich sind und ihre Oberflächenanteile an den beiden Gleitpartnern zur tribologischen Wirksamkeit ausreichen. Dazu wird oft ein Fünftel Anteil an der Oberfläche genügen. In bevorzugten Bauformen beträgt er die Hälfte und mehr.

Beispiele dafür bilden folgende Paarungen:

**Tabelle 4 e**

| Hauptgleitpartner 1 | | | Hauptgleitpartner 2 | | | vorzusehen sind tribologisch wesentliche Oberflächenanteile für | |
|---|---|---|---|---|---|---|---|
| PI | mit | PAA-F | PPS | mit | PAA-F | PI | PPS |
| | | PA 12-R | | | | PA 12 enthaltend | |
| PPO | mit | PETP-F | PPO | mit | PES-R | PETP | PES |
| PAA | ohne Kombination | | PAA | mit | PPSU-R | PAA | PPSU |

**Hilfsgleitpartner**

Der Hilfsgleitpartner ist unpolar.

Er kann entweder ein im Sinne von Maschinenelementen selbständig erfaßbarer Bauteil sein und beispielsweise als Zwischenbuchse oder Zwischenfolie oder Zwischenplatte zwischen den Hauptgleitpartnern laufen. Dies ist bei Radial-, Axial- und Flachführungs-Gleitlagerungen möglich. Im Falle von Zahnradpaarungen, oder im Gleiten von Nocke und Hebel kann der Hilfsgleitpartner kaum ein selbständig erfaßbarer Teil im Sinne von Maschinenelementen sein. In diesen Anwendungen, aber auch bei den meisten der erfindungsgemäßen Kunststoff/Kunststoff-Gleitlager-Paarungen, wird der unpolare Hilfsgleitpartner in einen oder in beide Hauptgleitpartner integriert.

**Tabelle 4 f**

Unpolare Kunststoffe, die bevorzugt als Hilfsgleitpartner dienen:

| | |
|---|---|
| PE | PS |
| UHMWPE | PS-vernetzt, sofern die Unpolarität erhalten bleibt |
| PP | PTFE |
| PIB | PVDC |

Tabelle 4 g

Morphologische Gestalt, in der die in Tabelle 4 f genannten Kunststoffe vorliegen können:

Einzel-Makromolekül

Makromolekül-Knäuel

Pulver (z. B. zwischen 0,001 und 0,1 mm Größe)

Körner (z. B. zwischen 0,1 und 3 mm Größe)

Fasern

Filze

Matten

Gewebe

Geflechte

Folien

Platten, Buchsen und andere Formkörper (z. B. Streifen, Spiralen)

Tabelle 4 h

Kombinationen zwischen chemischer und morphologischer Gestalt:

Jeder der in der Tabelle 4 f genannten Kunststoffe kann für sich allein und in einer einzigen morphologischen Gestalt laut 4 g den unpolaren Partner bilden.

Beispiele:     PE- oder UHMWPE-Pulver

PTFE-Fasern

PP-Gewebe

PS-vernetzt-Buchsen

Jeder der in der Tabelle 4 f genannten Kunststoffe kann für sich allein, jedoch in unterschiedlichen morphologischen Gestalten (laut 4 g) den unpolaren Partner bilden.

Beispiele:     Gewebe aus PTFE-Fasern mit dazwischengepreßtem PTFE-Pulver,
Fasern und Pulver aus PE im Gemisch.

Jeder der in Tabelle 4 f genannten Kunststoffe kann mit einem oder mehreren der in der gleichen Tabelle genannten anderen Kunststoffe kombiniert werden, wobei zwar die chemische Gestalt unterschiedlich, die morphologische Gestalt aber gleich ist.

Beispiele:     Mischungen von PE mit PP oder PE mit PIB oder PP mit PIB oder PE mit PP und PIB, wobei das Aufschließen bis zum Einzel-Makromolekül oder zumindest kleinen Makromolekül-Knäueln erfolgte, Mischgewebe aus Fasern von PTFE und PVDC, Pulvergemische aus UHMWPE und PTFE.

Jeder der in Tabelle 4 f genannten Kunststoffe kann mit einem oder mehreren der in der gleichen Tabelle genannten anderen Kunststoffe kombiniert werden, wobei sowohl die chemische Gestalt als auch die morphologische Gestalt zumindest bei einzelnen der Kunststoffe unterschiedlich sind.

Beispiele:     Loses Gemenge von PTFE-Fasern mit PE-Pulver,
PS-Folie mit eingelagerten PP-Fasern oder -Geweben,
PP-Buchse mit eingelagerten UHMWPE-Körnern, Körner aus Mischungen von PE mit PIB mit eingelagerten Fasern aus PVDC und Pulver aus UHMWPE,

22

Filz aus einem Fasergemisch PP/PE mit eingepreßter PTFE-Schicht,
Fasern aus PVDC oder PS oder PP oder PE mit eingelagerten oder an der Oberfläche
eingeschlossenen Pulvern von PTFE und/oder UHMWPE,

Austausch in obigen Beispielen gegen andere Kunststoffe aus der Tabelle 4 f,

Sonstige Kombinationen von zwei oder mehr Kunststoffen (lauf Tabelle 4 f) in zwei
oder mehr Formgestalten (laut Tabelle 4 g).

Tabelle 4 i

Beispiele für die Gestaltungsmöglichkeit von unpolaren Hilfsgleitpartnern, die selbständige Maschinenelemente darstellen:

Aus einem einzelnen der in Tabelle 4 f genannten Kunststoffe.

Beispiele: Herstellung von Folien, Platten, Buchsen und sonstigen Formkörpern nach den
bekannten Verarbeitungsverfahren der Kunststofftechnik (z. B. gießen, pressen,
spritzgießen, extrudieren, sintern, usw.).

Aus Kombinationen von chemischer und morphologischer Gestalt.

Beispiele: In Tabelle 4 h sind mehrere Möglichkeiten aufgezeigt, direkt zu selbständigen Formkörpern zu gelangen. Ferner sind dort auch mehrere Zwischenprodukte genannt,
die, für sich allein oder beigemengt zu einem oder mehreren der Kunststoffe laut
Tabelle 4 f, nach den bekannten Verarbeitungsverfahren der Kunststofftechnik zu
selbständigen Formkörpern verarbeitet werden können.

Tabelle 4 j

Beispiele für Möglichkeiten, den bzw. die unpolaren Hilfsgleitpartner in den bzw. die Hauptgleitpartner zu integrieren:
Ein Hauptgleitpartner oder beide Hauptgleitpartner, die nach den in den Tabellen 4 a bis 4 e mitgeteilten Strukturen aufgebaut sind — oder analog dazu —, enthalten in ihrem Gesamtvolumen — zumindest
aber an deren Gleit-Oberfläche — den Hilfsgleitpartner. Dieser besteht beispielsweise aus den Kunststoffen laut Tabelle 4 f in Gestalten laut Tabelle 4 g und Kombinationen laut Tabelle 4 h. Wiederum ist
es unmöglich, alle Kombinationsmöglichkeiten aufzuzählen. Die folgenden Beispiele mögen genügen,
wozu noch gesagt sein soll,

a) daß beide Hauptgleitpartner die angegebenen Hilfsgleitpartner enthalten können,
b) daß nur einer der angegebenen Hauptgleitpartner den bei ihm genannten Hilfsgleitpartner enthalten kann, der andere keinen,
c) daß beide angegebenen Hilfsgleitpartner in einem der Hauptgleitpartner vereinigt sein können.

| Der Hauptgleitpartner 1 enthält als Hilfsgleitpartner: | Der Hauptgleitpartner 2 enthält als Hilfsgleitpartner: |
| --- | --- |
| UHMWPE-Pulver | PTFE-Pulver |
| PE-Pulver + PTFE-Pulver | PS-Streifen (Makrostruktur) |
| PTFE-Gewebe | PIB-Körner |
| PP- und PVDC-Kurzfasern | PS-vernetzt-Gitter + UHMWPE-Pulver |
| PS, gefüllt mit UHMWPE-Pulver, als Spirale | Grobmaschiges Gestrick (Einbettung!) aus mit PTFE-Pulver gefülltem PVDC |
| Einen Partner nach Tab. 4 h | Anderen Partner nach Tab. 4 h |

**0 005 531**

## B) Beispiele der Paarung UNPOLAR/POLAR/UNPOLAR

### Hauptgleitpartner

Die beiden unpolaren Hauptgleitpartner bestehen aus einem oder mehreren der in Tabelle 4 f genannten Kunststoffe.

Jeder der Hauptgleitpartner kann aus einem einzelnen oder einem Gemisch dieser Kunststoffe hergestellt sein. Die Kunststoffe laut Tabelle 4 f können auch in den verschiedenen Gestalten laut Tabelle 4 g und in Kombinationen laut Tabelle 4 h vorliegen.

Die in Tabelle 4 i gegebenen Informationen können analog übernommen werden, um Hinweise zur Gestaltung von unpolaren Hauptgleitpartnern zu erhalten.

Im Rahmen dieser Vorschriften bzw. deren analoger Ausdeutung auf weitere Materialkombinationen, können die unpolaren Hauptgleitpartner aus dem gleichen Material (aus der gleichen Materialkombination) oder aus unterschiedlichem Material (aus unterschiedlichen Materialkombinationen) bestehen.

### Hilfsgleitpartner

Tabelle 4 k

Beispiele für die Gestaltungsmöglichkeiten von polaren Hilfsgleitpartnern, die selbständige Maschinenelemente darstellen:

Beispiele: Es wird auf die Tabellen 4 a bis 4 e verwiesen. Jeder der dort angegebenen Kunststoffe und jede der dort angegebenen Mehrstoff-Kombinationen kann auch zur Herstellung eines polaren Hilfsgleitpartners dienen, wobei die aus der Kunststofftechnik bekannten Verarbeitungsverfahren angewendet werden.

Tabelle 4 l

Beispiele für Möglichkeiten, den bzw. die polaren Hilfsgleitpartner in den bzw. die unpolaren Hauptgleitpartner zu integrieren:

Polare Kunststoffe, die bevorzugt als Hilfsgleitpartner dienen:

Siehe die in den Tabellen 4 a bis 4 e aufgezählten Materialien und Mehrstoff-Kombinationen.

Morphologische Gestalt, in der diese Materialien vorliegen können:

Siehe die in der Tabelle 4 g aufgezählten Formen, die auch analog hier für polare Kunststoffe Geltung haben.

Kombinationen zwischen chemischer Gestalt und morphologischer Gestalt:

Alles was in der Tabelle 4 h für unpolare Kunststoffe ausgesagt ist, gilt hier auch analog für polare Kunststoffe. Es bedarf keines großen Umdenkens, um in die dort aufgeführten Beispiele anstatt unpolarer, nunmehr polare Kunststoffe einzusetzen.

### Einige Beispiele

Wiederum ist es unmöglich, alle Kombinationsmöglichkeiten aufzuzählen. Die folgenden Beispiele mögen genügen, wozu noch gesagt sein soll,

a) daß beide Hauptgleitpartner die angegebenen Hilfsgleitpartner gemeinsam enthalten können,
b) daß nur einer der angegebenen Hauptgleitpartner den bei ihm genannten Hilfsgleitpartner enthalten kann, der andere keinen,
c) daß beide angegebenen Hilfsgleitpartner in einem der Hauptgleitpartner vereinigt sein können.

24

| Der unpolare Hauptgleitpartner 1 enthält als polaren Hilfsgleitpartner: | Der unpolare Hauptgleitpartner 2 enthält als polaren Hilfsgleitpartner: |
|---|---|
| PPS-Pulver | PAA-Spiralen, -Inseln (Makrostrukt.) |
| PES-Körner | PAA-Fasern oder Filze, Gewebe |
| PC-Streifen, gefüllt mit PPS-Pulver | PI-Inseln |
| PPO + PS-Gitter | PAI-Folien-Schnitzel |
| PU (teil-cycl.)-Streifen abwechselnd mit PATP-Streifen | PES-Streifen abwechselnd mit PI-Streifen |
| PBIA-Pulver | PPS-Pulver |

**Patentansprüche**

1. Tribologisches System aus Kunststoff/Kunststoff-Paarungen, bestehend aus zwei Hauptgleitpartnern und einem Hilfsgleitpartner, insbesonders Gleitlager, in dem die Kunststoffe — ggfs. unterstützt durch Schmierstoffe — in Gleitreibung zueinander Relativbewegungen ausführen, wobei wenigstens einer der Hauptgleitpartner und/oder ein Hilfsgleitpartner ein polares, cyclische Gruppierungen enthaltendes Polymer ist, in dem die cyclische Gruppierung zumindest auf einer Seite direkt an Stickstoff, Phosphor, Sauerstoff und/oder Schwefel gebunden ist oder in dem die Ringe solche Atome enthalten, aus der Gruppe

a)  einbindig aromatische Polymere
b)  aromatische Polyheterocyclen (Halb-Leiterpolymere)
c)  einbindige Polyheterocyclen
d)  aromatische Leiterpolymere
e)  Copolymerisate hergestellt aus den Polymeren a) bis d) zugrundeliegenden Monomeren untereinander oder mit anderen Monomeren
f)  Gemische der Polymeren a) bis d) untereinander oder mit anderen Polymeren

dadurch gekennzeichnet, daß

— entweder beide Hauptgleitpartner polar sind und unterschiedliche cyclische Gruppierungen und/oder unterschiedliche Atome oder Gruppen gebunden an die cyclische Gruppierung enthalten, und der Hilfsgleitpartner ein unpolares Polymer ist
— oder daß beide Hauptgleitpartner aus unpolaren Polymeren bestehen und der Hilfsgleitpartner aus einem polaren, cyclische Gruppierungen enthaltenden Polymeren a) bis f) besteht.

2. Tribologisches System nach Anspruch 1, dadurch gekennzeichnet, daß der Hilfsgleitpartner in Form einer Zwischenbüchse oder Zwischenfolie zwischen den Hauptgleitpartnern läuft.

3. Tribologisches System nach Anspruch 1, dadurch gekennzeichnet, daß der Hilfsgleitpartner in einen der Hauptgleitpartner derart integriert ist, daß Teile des Hilfsgleitpartners oder dessen Abbauprodukte oder Umwandlungsprodukte laufend in die Gleitzone abgegeben werden.

4. Tribologisches System nach den Ansprüchen 1 bis 3, dadurch gekennzeichnet, daß einer der Gleitpartner Schwefel und ein anderer Gleitpartner Sauerstoff enthält.

5. Tribologisches System nach einem der Ansprüche 1 bis 3, dadurch gekennzeichnet, daß einer der Gleitpartner Schwefel und ein anderer Gleitpartner Stickstoff enthält.

6. Tribologisches System nach einem der Ansprüche 1 bis 3, dadurch gekennzeichnet, daß einer der Gleitpartner Sauerstoff und ein anderer Gleitpartner Stickstoff enthält.

7. Tribologisches System nach Ansprüchen 1 bis 6, dadurch gekennzeichnet, daß einer der Hauptgleitpartner ein Polyphenylenoxyd, vorzugsweise Poly-2,6-dimethylphenylenoxyd, ist und der andere Hauptgleitpartner entweder ein aromatisches Polyamid oder ein Polyimid oder ein Polyamidimid oder ein Polybenzimidazol oder ein Polyalkylenterephthalat ist und der Hilfsgleitpartner aus Polyalkylen, vorzugsweise Polyäthylen, oder Polytetrafluoräthylen besteht.

8. Tribologisches System nach Ansprüchen 1 bis 6, dadurch gekennzeichnet, daß einer der Hauptgleitpartner ein schwefelhaltiges Polymer ist, vorzugsweise ein Polyarylsulfon oder ein Polyarylsulfid oder ein Polyarylsulfonat und der andere Hauptgleitpartner entweder ein aromatisches Polyamid oder ein Polyimid oder ein Polyamidimid oder ein Polybenzimidazol oder ein Polyalkylenterephthalat ist und

25

der Hilfsgleitpartner aus Polyalkylen, vorzugsweise Polyäthylen, oder aus Polytetrafluoräthylen besteht.

9. Tribologisches System nach Ansprüchen 1 bis 8, dadurch gekennzeichnet, daß die verwendeten Polymere auch übliche Additive, Füllstoffe, Schmierstoffe und/oder Verstärkungsstoffe enthalten.

10. Tribologisches System nach Ansprüchen 1 bis 9, dadurch gekennzeichnet, daß nur einer der polaren Hauptgleitpartner den unpolaren Hilfsgleitpartner enthält, oder daß beide polaren Hauptgleitpartner den gleichen oder unterschiedliche Hilfsgleitpartner enthalten.

11. Tribologisches System nach Ansprüchen 1 bis 9, dadurch gekennzeichnet, daß nur einer der unpolaren Hauptgleitpartner den polaren Hilfsgleitpartner enthält, oder daß beide unpolare Hauptgleitpartner den gleichen oder unterschiedliche Hilfsgleitpartner enthalten.

12. Tribologisches System nach Ansprüchen 1 bis 11, dadurch gekennzeichnet, daß als unpolares Polymer Polyäthylen, Polypropylen, Polystyrol, Polyisobutylen, Polytetrafluoräthylen, oder Polyvinylidenchlorid verwendet wird.

13. Tribologisches System nach Ansprüchen 1 bis 12, dadurch gekennzeichnet, daß ein unpolarer Gleitpartner aus einem Gemenge mehrerer Polymeren besteht, die gegebenenfalls in verschiedenen Formen vorliegen.

14. Tribologisches System nach Ansprüchen 1 bis 13, dadurch gekennzeichnet, daß in einen oder beide Hauptgleitpartner ein oder mehrere Hilfsgleitpartner in Makrostruktur eingelassen sind, vorzugsweise streifenförmig, spiralig, kreuzartig oder inselartig, in die Gleitfläche hineinragend.

15. Tribologisches System nach Ansprüchen 1 bis 13, dadurch gekennzeichnet, daß in einen oder beide Hauptgleitpartner chemisch andersartige jedoch in ihrer Polarität dem Hauptgleitpartner ähnliche Kunststoffe in Makrostruktur eingelassen sind, vorzugsweise streifenförmig, spiralig, kreuzartig oder inselartig, in die Gleitfläche hineinragend.

16. Tribologisches System nach Ansprüchen 1 bis 13, dadurch gekennzeichnet, daß in einen oder beide Hauptgleitpartner chemisch andersartige, jedoch in ihrer Polarität dem Hauptgleitpartner ähnliche Kunststoffe als Partikel, Fasern, Filze, Gewebe oder Geflechte eingelagert sind.

17. Tribologisches System nach Ansprüchen 14 oder 15, dadurch gekennzeichnet, daß die in Makrostruktur eingelassenen Materialien örtlich abwechselnd aus zweien oder mehreren Kunststoffen bestehen.

18. Tribologisches System nach Ansprüchen 1 bis 17, dadurch gekennzeichnet, daß mindestens eine der Gleitflächen der Hauptgleitpartner und/oder Hilfsgleitpartner durch Schlitze unterbrochen ist, die vorzugsweise streifenartig quer zur Gleitrichtung verlaufen oder spiralig oder kreuzförmig angeordnet sind, wobei diese Schlitze auch mit Leisten aus einem anderen Werkstoff ausgefüllt sein können, der den erfindungsgemäßen Paarungsvorschriften entspricht.

## Claims

1. Tribologic system of plastics/plastics pairings consisting of two main sliding partners and an auxiliary sliding partner, in particular sliding bearings, in which the plastics materials — if necessary assisted by lubricants — perform relative movements with respect to one another in sliding friction, at least one of the main sliding partners and/or an auxiliary sliding partner being a polar polymer which contains cyclic groupings and in which the cyclic grouping is directly bonded on at least one side to nitrogen, phosphorus, oxygen and/or sulphur or in which the rings contain such atoms, from the group

a)   univalent aromatic polymers
b)   aromatic polyheterocycles (semi-conductor polymers)
c)   univalent polyheterocycles
d)   aromatic conductor polymers
e)   copolymers produced from the monomers on which the polymers a) and d) are based, with one another or with other monomers
f)   mixtures of the polymers a) to d) with one another or with other polymers,

characterised in that

— either both main sliding partners are polar and contain different cyclic groupings, and/or different atoms or groups bonded to the cyclic grouping, and the auxiliary sliding partner is a non-polar polymer or
— in that both main sliding partners consist of non-polar polymers and the auxiliary sliding partner consists of a polar polymer a) to f) containing cyclic groupings.

2. Tribologic system as claimed in claim 1, characterized in that the auxiliary sliding partner runs between the main sliding partners in the form of an intermediate sleeve or intermediate foil.

3. Tribologic system as claimed in claim 1, characterized in that the auxiliary sliding partner is integrated in one of the main sliding partners in such a way that parts of the auxiliary sliding partner or the decomposition products of conversion products thereof are continuously delivered into the sliding zone.

4. Tribologic system as claimed in claims 1 to 3, characterized in that one of the sliding partners contains sulphur and another sliding partner contains oxygen.

5. Tribologic system as claimed in one of claims 1 to 3, characterized in that one of the sliding partners contains sulphur and another sliding partner contains nitrogen.

6. Tribologic system as claimed in one of claims 1 to 3, characterized in that one of the sliding partners contains oxygen and another sliding partner contains nitrogen.

7. Tribologic system as claimed in claims 1 to 6, characterized in that one of the main sliding partners is a polyphenylene oxide, preferably poly-2,6-dimethylphenylene oxide, and the other main sliding partner is either an aromatic polyamide or a polyimide or a polyamidimide or a polybenzimidazole or a polyalkylene terephthalate and the auxiliary sliding partner consists of polyalkylene, preferably polyethylene, or polytetrafluorethylene.

8. Tribologic system as claimed in claims 1 to 6, characterized in that one of the main sliding partners is a sulphur-containing polymer, preferably a polyarylsulphone or a polyarylsulphide or a polyarylsulphonate and the other main sliding partner is either an aromatic polyamide or a polyimide or a polyamidimide or a polybenzimidazole or a polyalkylene terephthalate and the auxiliary sliding partner consists of polyalkylene, preferably polyethylene, or of polytetrafluorethylene.

9. Tribologic system as claimed in claims 1 to 8, characterized in that the polymers used also contain usual additives, fillers, lubricants and/or reinforcing substances.

10. Tribologic system as claimed in claims 1 to 9, characterized in that only one of the polar main sliding partners contains the non-polar auxiliary sliding partner, or in that both polar main sliding partners contain auxiliary sliding partners which may be the same or different.

11. Tribologic system as claimed in claims 1 to 9, characterized in that only one of the non-polar main sliding partners contains the polar auxiliary sliding partner, or in that both non-polar main sliding partners contain auxiliary sliding partners which may be the same or different.

12. Tribologic system as claimed in claims 1 to 11, characterized in that polyethylene, polypropylene, polystyrene, polyisobutylene, polytetrafluorethylene or polyvinylidene chloride is used as a non-polar polymer.

13. Tribologic system as claimed in claims 1 to 12, characterized in that one non-polar sliding partner consists of a mixture of a plurality of polymers which if necessary are present in different forms.

14. Tribologic system as claimed in claims 1 to 13, characterized in that one or more auxiliary sliding partners is/are embedded in the macro-structure in one or both main sliding partners, preferably projecting in a banded manner, spirally, in a cross-like manner or in an insular manner into the sliding surface.

15. Tribologic system as claimed in claims 1 to 13, characterized in that plastics, which are of a type chemically different from the main sliding partner but are similar thereto in polarity, are embedded in the macrostructure in one or both main sliding partners, preferably projecting in a bandad manner, spirally, in a cross-like manner or in an insular manner into the sliding surface.

16. Tribologic system as claimed in claims 1 to 13, characterized in that plastics, which are of a type chemically different from the main sliding partner but are similar thereto in polarity, are embedded as particles, fibres, felts, tissues or meshes in one or both main sliding partners.

17. Tribologic system as claimed in claim 14 or 15, characterized in that the materials embedded in the macrostructure consist of two or more plastics materials alternating locally.

18. Tribologic system as claimed in claims 1 to 17, characterized in that at least one of the sliding surfaces of the main sliding partners and/or auxiliary sliding partner is interrupted by slits which extend preferably in a banded manner transverse to the sliding direction or are arranged spirally or in the manner of a cross, it also being possible for these slits to be filled with strips of another material which corresponds to the pairing provisions according to the invention.

## Revendications

1. Système tribologique à base de couplage matière plastique/matière plastique constitué par deux partenaires principaux anti-friction et un partenaire auxiliaire anti-friction, en particulier des paliers de glissement dans lesquels les matières plastiques — éventuellement aidées par un lubrifiant — accomplissent un mouvement relatif l'une par rapport à l'autre, avec une friction de glissement, où au moins un des partenaires principaux et/ou un partenaire auxiliaire anti-friction, est un polymère contenant des groupes cycliques polaires, le groupement cyclique étant lié, sur au moins un côté, directement à de l'azote, du phosphore, de l'oxygène et/ou du soufre, ou bien les cycles comportant de tels atomes, le polymère appartenant aux groupes:

a)   polymère aromatique à liaison simple,
b)   polyhétérocycles aromatiques (polymères »semi-échelle«)
c)   polyhétérocycles à liaison simple

d)  polymères ›échelle‹ aromatiques

e)  copolymères obtenus à partir des monomères à base des polymères a) à d) combinés entre eux ou avec d'autres monomères

f)  mélanges des polymères a) à d) entre eux ou avec d'autres polymères,

système caractérisé en ce que:

— soit les deux partenaires principaux anti-friction sont polaires et contiennent différents groupes cycliques et/ou différents atomes ou groupes liés sur les groupes cycliques, et le partenaire auxiliaire anti-friction est un polymère non polaire,

— soit les deux partenaires principaux anti-friction sont constitués par polymères non polaires, et le partenaire auxiliaire anti-friction est constitué par un polymère a) à f) contenant des groupes cycliques polaires.

2. Système selon la revendication 1, caractérisé en ce que le partenaire auxiliaire anti-friction s'étend entre les partenaires principaux de glissement sous la forme d'un coussinet ou d'une feuille intermédiaire.

3. Système selon la revendication 1, caractérisé en ce que le partenaire auxiliaire anti-friction est intégré dans l'un des partenaires principaux anti-friction de telle façon qu'une partie du partenaire auxiliaire ou ses produits de décomposition ou de transformation soient introduits en continu dans la zone de friction.

4. Système selon l'une quelconque des revendications 1 à 3, caractérisé en ce qu'un des partenaires contient du soufre et un autre partenaire contient de l'oxygène.

5. Système selon l'une quelconque des revendications 1 à 3, caractérisé en ce qu'un des partenaires contient du soufre et un autre partenaire contient de l'azote.

6. Système selon l'une quelconque des revendications 1 à 3, caractérisé en ce que l'un des partenaires contient de l'oxygène et un autre partenaire contient de l'azote.

7. Système selon l'une quelconque des revendications 1 à 6, caractérisé en ce que l'un des partenaires principaux est un oxyde de polyphénylène, de préférence l'oxyde de poly-2,6-diméthyl-phénylène, et l'autre partenaire principal est soit un polyamide aromatique, soit un polyimide, soit un polyamidoimide, soit un polybenzimidazole, soit un téréphtalate de polyalcoylène, et que le partenaire auxiliaire est constitué de polyalcoylène, de préférence le polyéthylène, ou de polytétrafluoroéthylène.

8. Système selon l'une quelconque des revendications 1 à 6, caractérisé en ce qu'un des partenaires principaux est un polymère contenant du soufre, de préférence un polyarylsulfone ou un polyarylsulfure ou un polyarylsulfonate, et l'autre partenaire principal est un polyaimide aromatique ou un polyimide ou un polyamidoimide ou un polybenzimidazole ou un téréphtalate de polyalcoylène, et que le partenaire auxiliaire est constitué de polyalcoylène, de préférence du polyéthylène, ou de polytétrafluoroéthylène.

9. Système selon l'une quelconque des revendications 1 à 8, caractérisé en ce que les polymères utilisés contiennent également des additifs courants, des charges, des lubrifiants et/ou des matières de renforcement.

10. Système selon l'une quelconque des revendications 1 à 9, caractérisé en ce que seulement l'un des partenaires principaux polaires contient le partenaire auxiliaire non polaire, on que les deux partenaires principaux polaires contiennent un partenaire auxiliaire identique ou différent.

11. Système selon selon l'une quelconque des revendications 1 à 9, caractérisé en ce que seulement l'un des partenaires principaux non polaires renferme le partenaire auxiliaire polaire, ou que les deux partenaires principaux non polaires renferment le partenaire auxiliaire identique ou différent.

12. Système selon l'une quelconque des revendications 1 à 11, caractérisé en ce que comme matière non polaire on utilise les polyéthylène, polypropylène, polystyrène, polyisobutylène, polytétrafluoroéthylène et chlorure de polyvinylidène.

13. Système selon l'une quelconque des revendications 1 à 12, caractérisé en ce qu'un partenaire non polaire est constitué par un mélange de plusieurs polymères, qui se trouvent éventuellement sous des formes différentes.

14. Système selon l'une quelconque des revendications 1 à 13, caractérisé en ce que, dans l'un ou les deux partenaires principaux, il est admis un ou plusieurs partenaires auxiliaires dans la macro-structure, de préférence sous forme de bande, de spirale, de croix ou d-îlot, de façon à pénétrer dans la surface de friction.

15. Système selon l'une quelconque des revendications 1 à 13, caractérisé en ce que, dans l'un ou les deux partenaires principaux, il est admis des matières synthétiques de nature chimique différente des partenaires principaux, mais de polarité identique à celle des partenaires principaux, dans la macro-structure, de préférence sous forme de bande, de spirale, de croix ou d'îlot, de façon à pénétrer dans la surface de friction.

16. Système selon l'une quelconque des revendications 1 à 13, caractérisé en ce que dans l'un ou les deux partenaires principaux, se trouvent incluses des matières synthétiques de nature chimique différente des partenaires principaux, mais de polarité identique à ceuxci, sous forme de particules, fibres, feutre, tissu ou réseau.

17. Système selon l'une des revendications 14 ou 15, caractérisé en ce que les matières incluses dans la macro-structure sont constituées de deux ou plusieurs metières synthétiques de localisation interchangeable.

18. Système selon l'une quelconque des revendications 1 à 17, caractérisé en ce qu'au moins l'une des surfaces de friction des partenaires principaux et/ou du partenaire auxiliaire, est interrompue par des fentes, qui sont disposées de préférence sous forme de bande perpendiculaire à la direction de glissement ou bien sous forme de spirale ou croisée, ces fentes pouvant être également remplies par des bandes en un autre matériau, qui répond aux directives d'association prescrites par l'invention.

Fig. 1

Fig. 2

Fig. 4

Fig. 3

Fig. 5

0 005 531

Fig. 7

Fig. 6

Fig. 9

Fig. 10

Fig. 8

33

Fig. 11

Fig. 12